# EUROPÄISCHE PATENTSCHRIFT

(11) **EP 1 620 335 B1**
(45) Veröffentlichungstag und Bekanntmachung des Hinweises auf die Patenterteilung: **30.11.2016**
(21) Anmeldenummer: 04726110.2
(22) Anmeldetag: 07.04.2004
(51) Int. Cl.: B65G 47/08, B65G 17/00

(54) **TRANSPORTEINRICHTUNG**
CONVEYING DEVICE
DISPOSITIF DE TRANSPORT

(30) Priorität: 12.04.2003 DE 10316941
(43) Veröffentlichungstag der Anmeldung: 01.02.2006
(73) Patentinhaber: Arzneimittel GmbH Apotheker Vetter & Co. Ravensburg, 88212 Ravensburg (DE)
(72) Erfinder: ROETHER, Manfred, 88677 Markdorf (DE); RIEDTER, Franz, 88289 Waldburg (DE)
(74) Vertreter: Gleiss, Alf-Olav
(86) Internationale Anmeldenummer: PCT/EP2004/003696
(87) Internationale Veröffentlichungsnummer: WO 2004/089788

(56) Entgegenhaltungen:
- DE-A- 10 201 841
- US-A- 4 712 670
- US-A- 5 377 815
- US-A- 5 465 826
- US-A- 5 529 168
- US-A- 6 019 214
- US-B1- 6 371 273

## Beschreibung

Die Erfindung betrifft eine Transporteinrichtung gemäß Oberbegriff des Anspruchs 1.

Transporteinrichtungen der hier angesprochenen Art sind bekannt. Sie werden unter anderem als Staurollenketten bezeichnet. Sie weisen ein flaches Transportelement auf, auf dem ein mit Rollen versehener Grundträger verlagerbar ist. Als ein flaches Transportelement wird beispielsweise eine Schiene bezeichnet, die -im Querschnitt gesehen- beispielsweise rechteckförmig ausgebildet ist und sich entlang des Transportweges der Transporteinrichtung erstreckt. Die Höhe der Schiene ist wesentlich größer als deren Dicke, daher also die Bezeichnung als flaches Transportelement. Der Grundträger weist einen mit mindestens zwei Rollen versehenen Grundkörper auf, die das flache Transportelement an den beiden entlang der Transportrichtung verlaufenden Seitenkanten umgreifen und so angeordnet sind, dass der Grundträger entlang des Transportelements fortbewegt werden kann und sicher an diesem in einer vorgegebenen Position gehalten wird. An dem Grundträger ist mindestens ein Objektträger angebracht, der dazu dient, mittels der Transporteinrichtung zu befördernde Objekte sicher zu halten.

Das Dokument US-A1-5465826 offenbart eine Transporteinrichtung mit einem flachen Transportelement und einem auf diesem mittels Rollen gelagerten Grundträger, an den ein Objektträger angebracht ist.

Es hat sich herausgestellt, dass für den Transport der Grundträger auf dem Transportelement aufwendige Antriebseinrichtungen erforderlich sind, die in vielen Fällen die Handhabung der von den Objektträgern gehaltenen Gegenstände behindern.

Aufgabe der Erfindung ist es daher, eine Transporteinrichtung zu schaffen, die einen sicheren Transport der Grundträger mit den Objektträgern auf dem Transportelement ermöglicht, ohne dass der Zugriff auf die von den Objektträgern gehaltenen Gegenstände behindert würde.

Zur Lösung dieser Aufgabe wird eine Transporteinrichtung vorgeschlagen, die die in Anspruch 1 genannten Merkmale aufweist. Sie zeichnet sich dadurch aus, dass das Transportelement selbst angetrieben ist und sich damit in Richtung der Transportrichtung bewegt. Dies führt dazu, dass die auf dem Transportelement gelagerten Grundträger mitgenommen werden, ohne dass es weiterer Antriebseinrichtungen bedürfte, die entlang des Transportweges vorgesehen wären und damit den Zugriff auf die von den Objektträgern gehaltenen Gegenstände behinderten.

Das Transportelement ist flach ausgebildet, wie dies oben beschrieben wurde. Durch diese Ausgestaltung kann ein Grundträger auf einfache Weise in einer gegenüber dem Transportelement definierten Position gehalten werden. Das Transportelement kann auch anders ausgebildet sein. Entscheidend ist, dass ein Grundträger in einer definierten Lage gehalten werden kann.

Bevorzugt wird ein Ausführungsbeispiel der Transporteinrichtung, das sich dadurch auszeichnet, dass das Transportelement kontinuierlich angetrieben ist. Diese Realisierung führt dazu, dass ständig Antriebskräfte auf die Grundträger übertragen werden. Wird ein an dem Transportelement gelagerter Grundkörper angehalten, um eine Bearbeitung des vom Objektträger gehaltenen Gegenstands zu ermöglichen, so läuft das Transportelement weiter und befördert andere Grundträger weiter. Hinter dem angehaltenen Grundträger entsteht quasi ein Stau, der sich ohne weiteren Eingriff auflöst, sobald der angehaltene Grundträger wieder freigegeben wird.

Das Transportelement ist 30 als flexibler Riemen ausgebildet. Diese Ausführungsform ermöglicht es besonders leicht, das Transportelement nicht nur entlang einer geradlinigen Förderstrecke zu führen, sondern beliebige Transportwege zu realisieren. Dabei können nicht nur Kreisbahnen realisiert werden. Denkbar ist es auch, das Transportelement beispielsweise entlang einer dreieckigen Förderstrecke zu bewegen, dabei auch unterschiedliche Höhen zu überwinden.

Mit dem Begriff "flexibel" wird hier also ausgesagt, dass der Riemen um Kurven geführt werden kann. In seiner Längsrichtung ist der Riemen aber praktisch nicht dehnbar, um die Übertragung von Antriebskräften zu ermöglichen.

Bei einem bevorzugten Ausführungsbeispiel ist eine als Schwalbenschwanzverbindung realisierbare Befestigung zwischen einem Grundträger und einem dort angebrachten Objektträger vorgesehen. Diese ermöglicht eine Verlagerung des Objektträgers gegenüber dem Grundkörper und auch dessen Austausch. Ein Objektträger kann aus der Schwalbenschwanzverbindung herausgenommen und durch einen neuen ersetzt werden, der dann mit dem Grundträger entlang des Transportelements befördert wird.

Bevorzugt wird weiterhin ein Ausführungsbeispiel der Transporteinrichtung, die ein Magazin aufweist, das eine Anzahl von Objektträgern aufnehmen kann. Das Magazin wird so zum Transportweg ausgerichtet, dass ein Objektträger aus einem Grundträger herausgeschoben und von dem Magazin aufgenommen werden kann. Aus diesem oder einem anderen kann dann ein neuer Objektträger in den Grundträger eingeschoben werden.

Weiterhin wird ein Ausführungsbeispiel der Transporteinrichtung bevorzugt, das sich dadurch auszeichnet, dass der Grundträger einen Grundkörper aufweist, der zumindest bereichsweise elastisch ausgebildet ist. Dabei ist vorzugsweise vorgesehen, dass der Grundkörper derart elastisch ausgebildet ist, dass er sich an das Transportelement anpassen kann, wenn dieses über eine Umlenkrolle geführt wird.

Bevorzugt wird schließlich ein Ausführungsbeispiel der Transporteinrichtung, das sich dadurch auszeichnet, dass mindestens eine Betätigungsvorrichtung vorgesehen ist, mit deren Hilfe ein oder mehrere Grundträger mit dem Transportelement gekoppelt werden können. Damit ist gemeint, dass die Grundträger so am Transportelement gehalten werden, dass sie nicht nur aufgrund der Reibung zwischen den Rollen des Grundträgers und dem Transportelement fortbewegt werden, sondern durch zusätzliche Haltekräfte.

Weitere Ausgestaltungen ergeben sich aus den übrigen Unteransprüchen.

Die Erfindung wird im Folgenden anhand der Zeichnungen näher erläutert. Es zeigen:
- Figur 1: eine Prinzipskizze einer Transporteinrichtung in Draufsicht;
- Figur 2: einen Querschnitt durch ein Transportelement der in Figur 1 dargestellten Transporteinrichtung entlang der in Figur 1 dargestellten Linie II-II;
- Figur 3: eine Prinzipskizze des in Figur 2 wiedergegebenen Grundträgers mit einem Objektträger in Draufsicht;
- Figur 4: eine Prinzipskizze eines mit einer Transporteinrichtung zusammenwirkenden Magazins;
- Figur 5: eine Draufsicht auf einen Ausschnitt einer Transporteinrichtung nach Figur 1 und
- Figur 6: zwei nebeneinander liegende Grundträger in Vorderansicht.

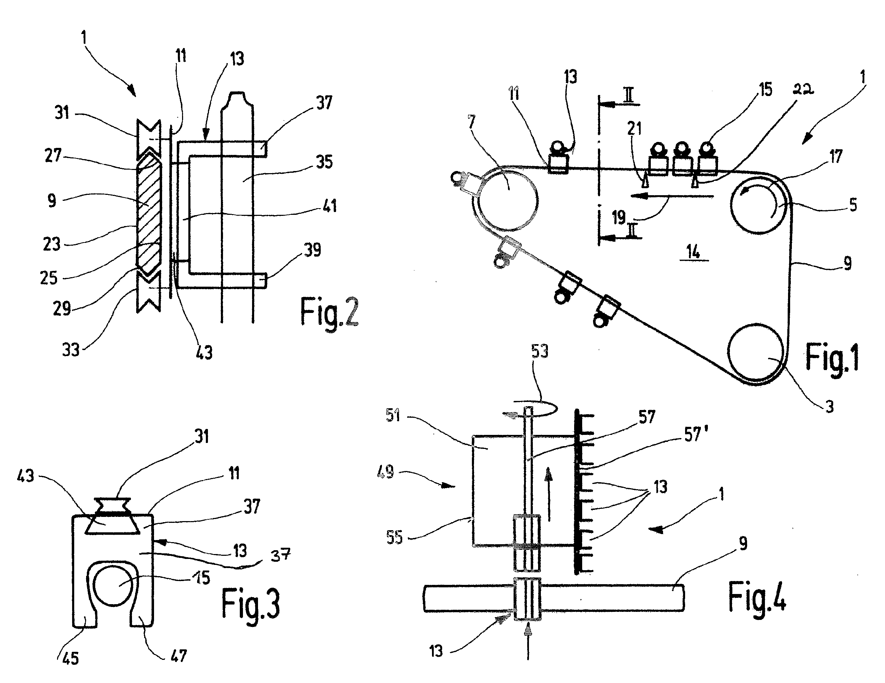

Die Prinzipskizze nach Figur 1 zeigt in Draufsicht eine Transporteinrichtung 1 mit einem um Umlenkrollen 3, 5 und 7 geführten Transportelement 9, auf dem eine Anzahl von Grundträgern 11 mit Objektträgern 13 vorgesehen sind. Die von den Objektträgern 13 gehaltenen Gegenstände 15 sind hier durch Kreise angedeutet.

Das Transportelement 9 wird hier in einer geschlossenen, dreieckförmigen Bahn geführt, wobei die Grundträger 11 außerhalb des von dem Transportelement 9 eingeschlossenen Innenraums 14 liegen und definiert damit einen Transportweg für die Grundträger 11.

Das Transportelement 9 wird gemeinsam mit den Grundträgern 11 außen auf der Umfangsfläche der Umlenkrollen 3, 5 und 7 geführt und steht mit diesen in Reibschluss. Wenigstens eine der Umlenkrollen, beispielsweise die Umlenkrolle 5, kann angetrieben werden, so dass sie sich, wie durch einen Pfeil 17 angedeutet, gegen den Uhrzeigersinn dreht. Dadurch bewegen sich die Grundträger 11, die in dem Bereich auf dem Transportelement 9 angeordnet sind, welcher zwischen den Umlenkrollen 5 und 7 liegt, von rechts nach links, was durch einen zweiten Pfeil 19 angedeutet ist.

Bei dem hier angedeuteten Ausführungsbeispiel der Transporteinrichtung 1 ist in dem eben angesprochenen Bereich des Transportselements 9 in dem von diesem eingeschlossenen Raum 14 ein erster Stopper 21 vorgesehen, der beweglich ausgebildet ist. Damit kann dieser aus einer ersten Funktionsstellung, in der er nicht in den Transportweg der Grundträger 11 ragt, in eine zweite hier dargestellte Funktionsstellung verlagert werden, in der er in den Transportweg der Grundkörper 11 hineinragt und als Anschlag dient. Der erste Stopper 21 kann auch ober- oder unterhalb des Transportelements 9 angeordnet sein; entscheidend ist, dass er in den Transportweg der Grundträger 11 verlagerbar und wieder zurückziehbar ist.

In Figur 1 ist angedeutet, dass durch den ersten Stopper 21 drei Grundträger 11 angehalten wurden, so dass diese aneinander anstoßend auf dem Transportelement 9 angeordnet sind und sich nicht in Richtung des Pfeils 19 bewegen.

Wie unten näher erläutert wird, sind die Grundträger 11 über Rollen auf dem Transportelement 9 gelagert, so dass sie einerseits von dem sich bewegenden Transportelement 9 mitgenommen werden, andererseits aber von einem stationären Stopper 21 angehalten werden können und zum Stillstand kommen. Mit dem Begriff "stationär" wird hier ausgesagt, dass sich der erste Stopper 21 nicht mit dem Transportelement 9 mitbewegt, zumindest nicht mit gleicher Geschwindigkeit. Dies dient eben dazu, die Grundträger 11 anzusteuern. Da die Grundträger 11 mittels Rollen an dem Transportelement 9 gelagert sind, ist es auch bei an dem ersten Stopper 21 aufgestauten Grundträgern 11 möglich, das Transportelement 9 weiterzubewegen, um anderen an dem Transportelement 9 gelagerten Grundträgern 11 weiterhin eine Antriebskraft zu vermitteln und diese entlang des Transportweges weiterzubefördern. Entsprechend sind hier am ersten Stopper 21 drei stillstehende Grundträger 11 angedeutet, die unmittelbar aneinander liegen und quasi aufgestaut werden, während im weiteren Verlauf des Transportelements 9 andere Grundträger 11 in einem Abstand zueinander angeordnet sind und mit dem Transportelement 9 fortbewegt werden.

Vorzugsweise wird das Transportelement 9 kontinuierlich angetrieben, so dass die nicht angehaltenen Grundträger 11 ungehindert gleichmäßig weitertransportiert werden. Ein kontinuierlicher Antrieb ist im übrigen relativ preiswert realisierbar. Dabei ist es auch möglich, mittels des Antriebs eine variable Transportgeschwindigkeit zu realisieren.

In einem Abstand zum ersten Stopper 21 ist hier ein zweiter Stopper 22 vorgesehen, dessen Funktionsweise der des ersten Stoppers entspricht. Der zweite Stopper 21 ist vorzugsweise im Innenraum 14 angeordnet, kann sich aber - wie der erste Stopper 21 - auch ober- oder unterhalb des Transportelements 9 befinden. Der Abstand zwischen den beiden Stoppern 21 und 22 ist so gewählt, dass eine vorgegebene Anzahl von Grundträgern 11 zwischen den beiden Stoppern Platz findet. Die Stopper sind vorzugsweise separat ansteuerbar. Dadurch können wahlweise nach Betätigung des ersten Stoppers 21 alle aufgestauten Grundträger 11 wieder freigegeben werden oder lediglich die Anzahl von Grundträgern, die zwischen den beiden Stoppern 21 und 22 vorhanden ist. Wird also der zweite Stopper 22 aktiviert und in den Transportweg der Grundträger 11 verlagert, können auch nach Freigabe des ersten Stoppers 21 nicht alle aufgestauten Grundträger 11 von dem Transportelement 9 weiterbefördert werden, sondern nur die zwischen den beiden Stoppern vorhandenen.

Der Abstand der beiden Stopper 21, 22 ist frei wählbar, so dass die Anzahl der zwischen diesen angeordneten Grundträger entsprechend vorbestimmt werden kann. Denkbar ist es auch, den zweiten Stopper 22 entlang des Transportelements 9 verlagerbar auszugestalten, um die Anzahl der zwischen den beiden Stoppern liegenden Grundträger 11 variieren zu können.

Die beiden Stopper 21 und 22 können dazu dienen, in einem vorgebbaren Bereich des umlaufenden Transportelements einen Puffer zu realisieren, aus dem eine vorbestimmte Anzahl von aufgestauten Grundträgern 11 freigegeben werden kann. Denkbar ist es aber auch, einen oder beide Stopper im Bereich einer Bearbeitungsstation vorzusehen, innerhalb derer eine Bearbeitung der von den an den Grundträgern 11 angebrachten Objektträgern 13 gehaltenen Gegenstände 15 erfolgt.

Figur 2 zeigt einen Schnitt entlang der in Figur 1 wiedergegebenen Linie II-II. Teile, die anhand von Figur 1 bereits erläutert wurden, sind mit gleichen Bezugsziffern versehen, so dass auf die Beschreibung zu Figur 1 verwiesen werden kann.

Figur 2 zeigt einen Teil der erfindungsgemäßen Transporteinrichtung 1 mit einem Transportelement 9, das im Schnitt gesehen einen langgestreckten Querschnitt aufweist und zwei in dieser Darstellung senkrecht verlaufende, im Wesentlichen parallel zueinander angeordnete Seitenwände 23 und 25 sowie schmale Längskanten 27 und 29 aufweist, an denen Rollen 31 und 33 eingreifen, über die der hier als Linie angedeutete Grundträger 11 am Transportelement 9 gelagert ist.

Die Längskanten 27, 29 und die Rollen 31, 33 können so aufeinander abgestimmt sein, also eine komplementäre Kontur aufweisen, dass die Rollen 31, 33 sicheren Halt finden und nicht seitlich abrutschen.

Das Transportelement 9 ist also nach Figur 1 im Querschnitt gesehen im Wesentlichen rechteckförmig ausgebildet. Die Längskanten sind aber nicht eben. Bei dem Ausführungsbeispiel gemäß Figur 2 sind diese vielmehr nach oben oder unten ausgewölbt, so dass sie in komplementär ausgebildete Rollen 31 und 33 eingreifen können. Entsprechend ist es möglich, die Längskanten 27 und 29 des Transportelements 9 konkav auszubilden und in den dadurch realisierten Längsrinnen des Transportelements 9 die Rollen 31 und 33 eingreifen zu lassen.

Entscheidend ist also, dass zwischen den Längskanten 27 und 29 des Transportelements 9 und den Rollen 31 und 33 des Grundträgers eine Kopplung durch Formschluss entsteht, und dass der Grundträger 11 ohne weitere Halteelemente oder gar Zusatzschienen oder dergleichen gehalten wird. Das Transportelement 9 dient also vorzugsweise als ausschließlicher Träger für die Grundträger 11.

Mit dem Grundträger 11 ist der Objektträger 13 verbunden, der hier ein Objekt beziehungsweise einen Gegenstand 15 trägt, beispielsweise einen Spritzengrundkörper oder eine Karpule.

Bei diesem Ausführungsbeispiel ist der Objektträger 13 U-förmig ausgebildet, so dass ein oberer im wesentlichen horizontal verlaufender erster Schenkel 37 und in einem Abstand dazu ein im wesentlichen parallel verlaufender unterer zweiter Schenkel 39 vorgesehen sind. Die beiden Schenkel werden durch ein senkrecht dazu verlaufendes Element 41 miteinander verbunden.

Zwischen dem Objektträger 13 und dem Grundträger 11 ist eine Befestigung vorgesehen, die hier als Schwalbenschwanzverbindung 43 realisiert ist und damit eine Verschiebbarkeit des Objektträgers 13 gegenüber dem Grundträger 11 erlaubt, hier nach oben und unten. Auf geeignete Weise, vorzugsweise durch eine Rastverbindung, die beispielsweise eine federbelastete Kugel aufweisen kann, ist sichergestellt, dass der Objektträger 13 in einer gewünschten Stellung verriegelnd gegenüber dem Grundträger 1 gehalten wird. Entscheidend ist hier die angegebene Verlagerbarkeit des Objektträgers 13 gegenüber dem Grundträger 11. Statt der Schwalbenschwanzverbindung 43 können auch andere diese Verschiebbarkeit ermöglichende Befestigungen beziehungsweise Verbindungen eingesetzt werden. Figur 3 zeigt den Grundträger 11 und Objektträger 13 der Figur 2 in Draufsicht, wobei in dieser Darstellung gleiche Teile mit gleichen Bezugsziffern versehen sind, allerdings das Transportelement 9 weggelassen ist.

Deutlich erkennbar ist die am Grundträger 11 drehbar gelagerte Rolle 31, ebenso der erste Schenkel 37 des Objektträgers 13. Schließlich ist auch die als Schwalbenschwanzverbindung 43 ausgebildete Befestigung des Objektträgers 13 zur Halterung am Grundträger 11 angedeutet.

Die Draufsicht nach Figur 3 lässt erkennen, dass der Objektträger 13 hier quasi als Clip ausgebildet ist und mindestens einen vorzugsweise nachgiebig federnden Haltearm 45 und/oder 47 umfasst, der/die den Gegenstand 15 beziehungsweise die Karpule umgreifen und sicher halten. Die Art der Ausgestaltung des Objektträgers 13 ist frei wählbar. Besonders bewährt hat sich jedoch ein Clip, in den zu befördernde Gegenstände leicht eingesetzt und ausgetauscht werden können.

Aus der Darstellung gemäß Figur 3 der als Schwalbenschwanzverbindung 43 ausgebildeten Befestigung ist erkennbar, dass es möglich ist, den Objektträger 13 senkrecht aus der Bildebene von Figur 3 heraus und in diese hinein zu verschieben, dass aber Antriebskräfte, die in Figur 3 in horizontaler Richtung von links nach rechts oder umgekehrt auf die Schwalbenschwanzverbindung 43 wirken, keine Verlagerung des Objektträgers 13 gegenüber dem Grundkörper 11 bewirken. Damit ist sichergestellt, dass die Objektträger 13 auch ohne zusätzliche Sicherung entlang des Verlaufs des Transportelements 9 befördert werden können, dass aber ein Austausch der Objektträger 13 ohne weiteres möglich ist, indem parallel zu den Seitenwänden 23 und 25 des Transportelements 9 wirkende Kräfte auf den Objektträger 13 ausgeübt werden, so dass dieser gegenüber dem Grundträger 11 verlagert wird.

Figur 4 zeigt einen Ausschnitt der Transporteinrichtung 1 mit einem Magazin 49. Gleiche Teile sind mit gleichen Bezugsziffern versehen, so dass insofern auf die Beschreibung zu den vorangegangenen Figuren verwiesen wird, um Wiederholungen zu vermeiden.

Figur 4 zeigt einen Abschnitt des Transportelements 9 mit einem lediglich angedeuteten Objektträger 13. In einem Abstand oberhalb des Transportelements 9 befindet sich ein Magazin 49, das hier einen hier zylindrisch ausgebildeten Grundkörper 51 aufweist, der auf geeignete Weise drehbar gelagert ist, was durch einen Pfeil 53 angedeutet wird. Auf der Umfangsfläche 55 des Grundkörpers 51 sind Befestigungselemente 57, 57' vorgesehen, die denen entsprechen, die am Grundträger 11 vorgesehen sind. Es wird auch hier eine Schwalbenschwanzverbindung realisiert, so dass es also möglich ist, den Objektträger 13 senkrecht nach oben zu verschieben und hier mit dem Befestigungselement 57 in Eingriff zu bringen, das fluchtend mit der Schwalbenschwanzverbindung des Grundträgers 11 angeordnet ist.

Die Befestigungselemente 57, 57' sind -in vertikaler Richtung gesehen- so lang ausgebildet, dass mehrere Objektträger 13 übereinander auf ein Befestigungselement 57, 57' geschoben werden können. Es können also nacheinander von mehreren Grundträgern 11 Objektträger 13 auf die Befestigungselemente 57, 57' geschoben werden.

Nach einer Drehung des Grundkörpers 51 des Magazins 49 können dort vorhandene Objektträger 13 nach unten verschoben werden, so dass diese von unterhalb des Magazins 49 liegenden Grundträgern 11 aufgenommen werden. Auf diese Weise wird ein einfacher Austausch von Objektträgern 13 und damit auch ein so genannter Formatwechsel ermöglicht.

In Figur 4 sind beispielhaft auf der rechten Seite des Grundkörpers 51 mehrere übereinander liegende Objektträger 13 angedeutet, die auf das Befestigungselement 57' aufgeschoben sind.

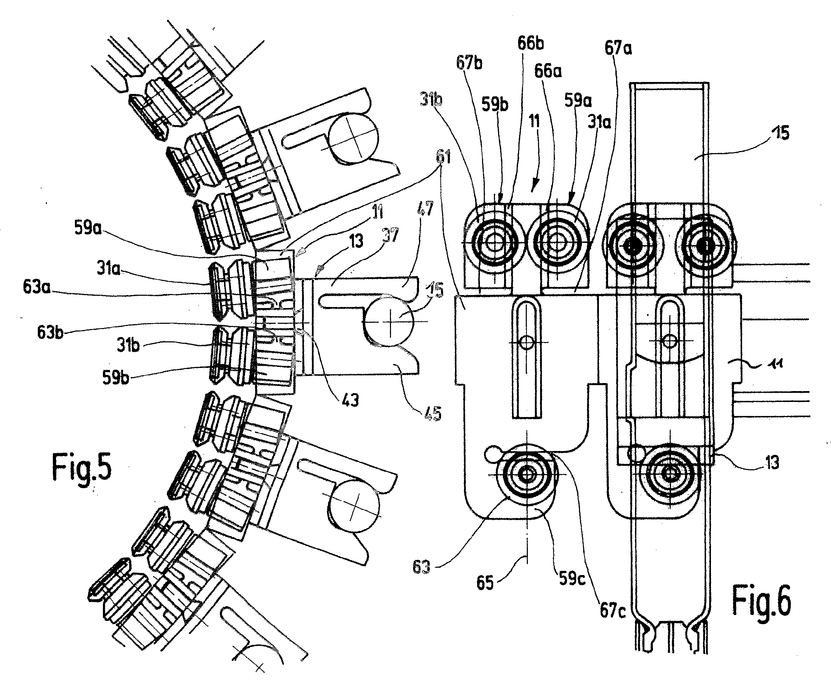

Figur 5 zeigt wiederum in Draufsicht, also ähnlich wie Figur 3, eine Anzahl von Grundträgern 11 und daran befestigten Objektträgern 13. Diese halten jeweils einen zylindrischen Gegenstand 15. Alle Grundträger sind über Rollen an einem unter einem Bogen verlaufenden, hier nicht dargestellten Transportelement gelagert. Bei der Darstellung gemäß Figur 5 sind mehrere aneinander stoßende Grundträger dargestellt. Diese sind also quasi aufgestaut.

Beispielhaft wird hier einer der Grundträger 11 näher erläutert. Bei dem hier dargestellten Ausführungsbeispiel ist, anders als bei dem in Figur 3 gezeigten, der Grundträger 11 breiter ausgelegt als der Objektträger 13. In der Draufsicht ist auch hier der obere erste Schenkel 37 des Objektträgers 13 erkennbar, der wiederum als Clip ausgebildet ist, wobei die Haltearme 45 und 47 hier nicht symmetrisch ausgebildet sind. Der erste Haltearm 47 ist länger als der gegenüberliegende zweite Haltearm 45 und dient daher als Federarm zur Fixierung des Gegenstands 15.

Erkennbar ist hier, dass die Befestigung zwischen Grundträger 11 und Objektträger 13 wiederum beispielhaft als Schwalbenschwanzverbindung 43 ausgelegt ist, so dass also eine Verschiebung des Objektträgers 13 gegenüber dem Grundträger 11 in Transportrichtung oder in Gegenrichtung dazu nicht möglich ist. Allerdings kann der Objektträger 13 senkrecht zur Bildebene in Figur 5 gegenüber dem Grundträger 11 verlagert werden.

Der hier dargestellte Grundträger 11 weist auf seiner dem Betrachter zugewandten Oberseite zwei Rollen 31a und 31b auf, die in einem Abstand zueinander angeordnet und so ausgebildet sind, dass sie den Grundträger 11 sicher am Tragelement 9 halten. Es ist hier, wie in Figur 2 und 3 bereits angedeutet, möglich, die Rollen so auszubilden, dass sie die Längskanten 27 und 29 des Transportelements 9 umgreifen, wobei die Längskanten eine nach außen konisch zulaufende Verjüngung also eine quasi prismatische Form aufweisen können, damit die Rollen besseren Halt finden und sich selbsttätig am Transportelement 9 zentrieren und verriegelnd halten, also nicht seitlich abrutschen können. Die formschlüssige Kopplung zwischen den Längskanten 27 und 29 sowie den Rollen 31 a und 31 b kann auch anders realisiert werden. Beispielsweise könnten die Rollen auch in U-förmige Vertiefungen in den Längskanten eingreifen.

Figur 5 lässt erkennen, dass die Rollen 31a und 31b an Befestigungsarmen 59a und 59b des Grundträgers 11 angebracht sind, die beim Durchlaufen einer Kurve gegenüber dem Grundkörper 61 des Grundträgers 11 verbogen beziehungsweise verschwenkt sind, damit die Rollen 31 a und 31 b dem Verlauf des hier nicht dargestellten und in einem Radius gebogenen Transportelements 9 folgen können: Die Befestigungsarme 59a und 59b sind über Biegezonen 63a, 63b mit dem Grundkörper 61 verbunden, die sich durch eine reduzierte Dicke auszeichnen und damit eine gewisse Elastizität aufweisen.

Figur 6 zeigt zwei nebeneinander liegende Grundträger 11 in Vorderansicht, wobei nur der rechte einen Objektträger 13 trägt.

Aus der Draufsicht auf den Grundträger 11 wird deutlich, dass die Befestigungsarme 59a und 59b oben zwei Rollen 31 a und 31 b tragen. Die Biegezonen 63a und 63b werden, wie auch aus Figur 5 ersichtlich ist, hier durch in einem Abstand zur Symmetrieachse 65 des Grundträgers 11 senkrecht verlaufende Rillen 66a, 66b realisiert, so dass sich Bereiche reduzierter Materialstärke ergeben, so dass die Rollen 31a und 31b elastisch schwenkbar gegenüber dem Grundkörper 61 des Grundträgers 11 gelagert sind. Um die Schwenkbarkeit der Befestigungsarme 59a und 59b zu ermöglichen, sind auch horizontale Schlitze 67a und 67b vorgesehen, die außen von rechts und links in den Grundkörper 61 des Grundträgers 11 eingebracht sind und in einem Abstand zur Mittelachse 65 enden und die Biegezonen 63a und 63b schneiden. Dadurch sind die Befestigungsarme 59a und 59b gegenüber dem Grundkörper 61 beweglich ausgebildet.

Bei dem Ausführungsbeispiel nach Figur 6 sind die Grundträger 11 mit drei Rollen versehen, oben mit den beiden Rollen 31a und 31b und unten mit einer hier im Bereich der Mittelachse 65 gelagerten Rolle 63. Eine derartige Ausgestaltung führt auf einfache Weise zu einer besonders exakten Ausrichtung des Grundträgers 11 gegenüber dem Transportelement 9.

Auch die untere Rolle 63 ist an einem nachgiebigen Befestigungsarm 59c angebracht, der gegenüber dem Grundkörper 61 schwenkbar ist, indem oberhalb der Rolle 33 ein horizontal verlaufender Schlitz 67c vorgesehen ist, der von außen über die Mittelachse 65 hinweg in den Grundkörper 61 eingebracht ist.

Der rechts von dem beschriebenen Grundträger 11 liegende Grundträger 11 ist mit einem Objektträger 13 versehen, in den ein Gegenstand, beispielsweise eine Karpule 15 eingeclipst ist.

Bei der hier beschriebenen Transporteinrichtung 1 kann das Transportelement 9 als elastisches Metallband ausgebildet sein, vorzugsweise wird jedoch ein Riemen aus Kunststoff oder einem Verbundmaterial gewählt, der in Transportrichtung gesehen vorzugsweise eine geringe Elastizität aufweist, so dass von einem Antrieb in den Riemen, also in das Transportelement, eingeleitete Kräfte auch über große Strecken sicher übertragen werden können und damit ein Antrieb der Grundträger 11, die an dem Transportelement 9 beziehungsweise dem Riemen gelagert sind, sicherzustellen.

Ein Riemen hat gegenüber einem Metallband den Vorteil, dass er in der Regel flexibler ist, so dass ein kleinerer Krümmungsradius in einem Kurvenbereich realisiert werden kann. Darüber hinaus ist es bei Verwendung eines Riemens eher möglich, Höhenunterschiede zu überwinden, die von dem Transportelement 9 getragenen Grundträger also auf Ebenen, die in einem Abstand zueinander angeordnet sind, zu fördern.

Bei der Realisierung einer Transporteinrichtung 1 können, wie oben beschrieben, eine Anzahl von Grundträgern 11 mittels eines Transportelements 9 angetrieben und transportiert werden. Damit ist es möglich, Objektträger 13 und von diesen gehaltenen Gegenstände 15 verschiedenen Bearbeitungsstationen zuzuführen und die Gegenstände 15 zu bearbeiten, während diese mit dem Grundträger 11 auf dem Transportelement 9 gelagert bleiben. Dazu wird, wie anhand von Figur 1 erläutert, mindestens ein Stopper vorgesehen, der in den Transportweg der Grundträger 11 beziehungsweise Objektträger 13 hineinragt und diese anhält. Nachfolgende Grundträger 11 werden damit aufgestaut. Da die Grundträger 11 exakt an dem Transportelement 9 ausgerichtet werden können, ist es möglich, die von den Grundträgern 11 herangeförderten Gegenstände 15 exakt zu bearbeiten.

Durch geeignete Sensoren kann festgestellt werden, ob an einem Stopper ein Grundträger 11 aufgelaufen ist und ob also die Bearbeitung eines Gegenstands 15 erfolgen kann.

Über ein Magazin 49 können aus dem laufenden Transportgeschehen, also ohne dass das Transportelement 9 angehalten wird, Objektträger 13 von einem Grundträger abgenommen und durch andere ersetzt werden. Vorzugsweise wird im Bereich eines Magazins 49 mindestens ein Stopper angeordnet, damit die Objektträger 13 gegenüber diesem angehalten und ausgerichtet und ausgetauscht werden können. Bearbeitete Gegenstände 15 können also mit dem Objektträger 13 abgenommen und durch unbearbeitete ersetzt werden. Dabei ist es auch möglich, Gegenstände unterschiedlicher Größe in die laufende Bearbeitung einzuführen.

Letztlich ist es dabei nicht zwingend erforderlich, Magazine 49 mit einem zylindrischen Grundkörper 51 zu verwenden. Es können auch einzelne Befestigungselemente 57 an das Transportelement 9 herangefahren werden, um Objektträger 13 aus der Transportbahn herauszubewegen oder neue einzubringen.

Zur Funktion der anhand der Figuren erläuterten Transporteinrichtung ist Folgendes festzuhalten:
Die Transporteinrichtung 1 dient dazu, Gegenstände 15 auf einfache und kostengünstige Weise zu transportieren und dabei Förderwege zu wählen, die nicht nur in einer Ebene zu liegen brauchen.

Die Antriebskraft wird durch ein Transportelement 9 sichergestellt, an dem mittels Rollen gelagerte Grundträger 11 verschiebbar angebracht sind. Dabei ist sichergestellt, dass einerseits ausreichende Antriebskräfte auf die Grundträger 1 übertragen werden. Andererseits ist es möglich, die Grundträger mittels eines Stoppers 21 anzuhalten und aufzustauen, ohne dass andere nicht vom Stopper 21 erfasste Grundträger in ihrem Weitertransport beeinträchtigt würden.

Die Grundträger 11 können auf einer geschlossenen Bahn transportiert werden, die in weiten Maßen frei wählbar ist. Beispielsweise kann eine in Figur 1 dargestellte Dreiecksbahn realisiert werden, indem das Transportelement 9 um Umlenkrollen 3, 5 und 7 auf einer geschlossenen Bahn bewegt wird. Die Grundträger 11 befinden sich in der Regel außerhalb des vom Transportelement 9 eingeschlossenen Raums 14.

Entlang der Bewegungsbahn der Grundträger 11 können eine oder mehrere Bearbeitungsstationen vorgesehen werden, innerhalb derer die von dem Grundträger 11 beziehungsweise dem daran befestigten Objektträger 13 gehaltenen Gegenstände 15 bearbeitet werden. Die Bearbeitung kann darin bestehen, die vom Objektträger 13 gehaltenen Gegenstände 15 mit zusätzlichen Elementen zu versehen, also ein fertiges Produkt herzustellen, oder darin, entsprechende Gegenstände 15 zu reinigen, mit Substanzen zu befüllen und zu verschließen oder dergleichen.

Um eine definierte Bearbeitung zu ermöglichen, werden die mittels eines Objektträgers 13 auf einem Grundträger 11 angeordneten Gegenstände 15 angehalten, indem mindestens ein Stopper, hier ein erster Stopper 21, in die Bewegungsbahn der Grundträger 11 gebracht wird, so dass dieser angehalten und nachfolgende Grundträger 11 aufgestaut werden.

Ein Aufstauen von Grundträgern 11 kann auch auf freien Strecken, also außerhalb von Bearbeitungsstationen, erfolgen, um eine Anzahl von Grundträgern 11 in einem Puffer zur Verfügung zu stellen.

In den Bearbeitungsstationen können Sensoren vorgesehen werden, um die einzelnen Positionen der Grundträger 11 und den von den zugehörigen Objektträgern 13 gehaltenen Gegenständen 15 zu erfassen und um eine exakte Positionierung zu gewährleisten. Auch kann erfasst werden, ob überhaupt ein Grundträger 11 an einem Stopper anliegt und in einer Bearbeitungsstation oder einem Puffer vorhanden ist.

Durch die hier gewählte Befestigung der Objektträger 13 am Grundträger 11 ist ein Austausch fertig bearbeiteter Objekte 15 möglich. Diese können in ein Magazin 49 eingebracht und einer weiteren Bearbeitung oder dergleichen zur Verfügung gestellt werden. Aus demselben oder einem anderen Magazin können zu bearbeitende Gegenstände 15 in die Transportbahn eingebracht und zur Verfügung gestellt werden.

Diese Austauschbarkeit der Gegenstände 15 erlaubt es auch, Gegenstände unterschiedlicher Größe und Art universell verschiedenen Bearbeitungsstationen zur Verfügung zu stellen.

Figur 1 lässt erkennen, dass alle Grundträger 11 auf der dem eingeschlossenen Raum 14 abgewandt liegenden Außenseite des Transportelements 9 angeordnet sind. In Kurven liegen die Grundträger 11 also außen auf den Umlenkrollen 3, 5 und 7. Bei einer Bewegung gegen den Uhrzeigersinn, wie sie durch den Pfeil 17 angedeutet ist, kann das Transportelement 9 also nur - in Transportrichtung gesehen - Linkskurven ausführen.

Falls es erforderlich sein sollte, eine Kurve in entgegengesetzter Richtung durchzuführen, kann das Transportelement 9 verschränkt werden, also während der Transportbewegung um eine in Transportrichtung weisende Achse so um 180° gedreht werden, dass die Grundträger 11 quasi auf der gegenüberliegenden Seite des Transportweges angeordnet sind. Nach einer derartigen Schränkung des Transportelements 9 ist eine Kurve in entgegengesetzter Richtung, hier also nach rechts, möglich.

Bei der hier vorgegebenen Antriebsart, bei der das Transportelement 9 angetrieben wird und die Grundträger 11 mitnimmt, können in Abhängigkeit von der Reibung der Rollen 31, 33 nur relativ geringe Höhenunterschiede überwunden werden, weil sonst die Grundträger 11 auf dem Transportelement 9 entgegen der Transportrichtung zurückrollen.

Wenn Höhenunterschiede überwunden werden müssen, wenn also Grundträger 11 auf eine höherliegende Ebene transportiert werden sollen, muss die freie Beweglichkeit zwischen dem Grundträger 11 und dem Transportelement 9 reduziert beziehungsweise ganz aufgehoben werden, um die Grundträger 11 quasi mit dem Transportelement 9 zu koppeln.

Bei leichteren Steigungen ist es möglich, die zwischen Grundträger 11 und Transportelement 9 gegebenen Reibungskräfte dadurch zu erhöhen, dass das Transportelement 9 quasi einer Schraubenlinie folgt und etwas verschränkt wird. Möglich ist es aber auch, eine Klemmvorrichtung am Objektträger 13 oder vorzugsweise am Grundträger 11 vorzusehen, die bei Bedarf eine Kopplung zwischen Grundträger 11 und Transportelement 9 sicherstellt, so dass Höhenunterschiede überwunden werden können, ohne dass die Grundträger 11 auf dem Transportelement 9 entgegen der Transportrichtung zurückrollen.

Denkbar ist es beispielsweise, Grundträger 11 oder Objektträger 13 mit einem beispielsweise verschwenkbaren Hebel zu versehen, der über ein in der Nähe des Grundkörpers oder des Transportelements liegendes Steuerelement verschwenkbar ist und so in das Transportelement 9 eingreift, dass der zugehörige Grundträger 11 mit dem Transportelement 9 gekoppelt wird und synchron mit diesem auch bei Überwindung einer Steigung mitläuft. Als Steuerelement kann beispielsweise eine entlang des Transportweges verlaufende Schiene sein, die auf den Hebel einwirkt, und diesen beispielsweise verschwenkt.

Die Reibungskräfte zwischen Transportelement 9 und Grundträger 11 können auch dadurch erhöht werden, dass der Grundträger 11 gegen das Transportelement 9 angedrückt und so mit diesem aufgrund höherer Reibungskräfte gekoppelt wird.

Eine derartige Kopplung zur Überwindung eines Anstiegs ist auch einsetzbar, wenn das Transportelement 9 von einem höheren Niveau auf ein tiefer liegendes Niveau geführt wird. In diesem Fall wird verhindert, dass die Grundträger 11 unkontrolliert entlang des Transportelements 9 nach unten rollen und möglicherweise Schaden nehmen.

Bei Verwendung derartiger Vorrichtungen zur Kopplung von Grundträger 11 und Transportelement 9 und/oder bei Realisierung eines verschränkten Verlaufs des Transportelements 9 können auch Höhenunterschiede senkrecht nach oben und nach unten überwunden werden.

Durch den Einsatz zweier in Förderrichtung des Transportelements 9 gesehen hintereinander liegender Stopper kann der Abstand zwischen zwei aufeinanderfolgenden Grundträgern 11 eingestellt werden. Zunächst wird der erste Stopper 21 aktiviert, um einen oder mehrere Grundträger anzuhalten. Ein zweiter Stopper 22 ist in einem derartigen Abstand hinter dem ersten Stopper 21 angeordnet, dass bei Betätigung dieses zweiten Stoppers 22 bei einem Stau von Grundträgern der zweite hinter dem ersten Stopper liegende Grundträger 11 angehalten wird. Nun kann der erste Stopper 21 deaktiviert werden, um den unmittelbar hinter diesem liegenden Grundträger 11 freizugeben. Dieser wird nun mit der Geschwindigkeit des Transportelements 9 weiterbewegt. Nach einem vorbestimmten Zeitabschnitt wird der zweite Stopper 22 freigegeben, so dass nun der hier angehaltene Grundträger 11 von dem Transportelement 9 mitgenommen werden kann. Bei Abstimmung der Freigabe des zweiten Stoppers 22 in Abhängigkeit von der Transportgeschwindigkeit des Transportelements 9 und gegebenenfalls unter Berücksichtigung einer Anlaufverzögerung eines angehaltenen Grundträgers 11 kann der Abstand zwischen zwei aufeinanderfolgenden Grundträgern eingestellt werden. Die Anzahl der Stopper kann auch erhöht werden, um die Einflussmöglichkeiten auf die gestauten Grundträger 11 zu verbessern. Durch Veränderung des Abstandes zwischen den beiden Stoppern 21, 22 kann auch jeweils eine Gruppe von Grundträgern 11 freigegeben werden. Es kann also jeweils eine vorgebbare Anzahl von Grundträgern 11 und zugehörigen Objektträgern 13 einer Bearbeitungsstation zugeführt und jeweils in einem Takt bearbeitet werden.

Die Anzahl der einer Bearbeitungsstation zugeführten Gegenstände 15 kann auch dadurch variiert werden, dass auf einem Grundträger 11 eine unterschiedliche Anzahl von Objektträgern 13 angeordnet wird oder unterschiedliche Objektträger, die eine unterschiedliche Anzahl von Gegenständen 15 aufnehmen können.

Die Transportgeschwindigkeit der Grundträger 11 und der zugehörigen Gegenstände 15 kann in einem gewissen Umfang unabhängig von der Transportgeschwindigkeit des Transportelements 9 gewählt werden. Beispielsweise können vor einer Bearbeitungsstation die Objektträger 13 in ein parallel zum Transportelement 9 angeordnetes zusätzliches Transportelement überführt werden. Die Überführung von einem zum anderen Transportelement wird dadurch möglich, dass Objektträger 13 gegenüber einem Grundträger 11 wegen der Schwalbenschwanzverbindung 13 senkrecht zur Transportrichtung verschiebbar und damit auf einen Grundträger überführbar sind, der auf einem parallel zum Transportelement 9 verlaufenden zusätzlichen Transportelement angeordnet ist und mit einer unterschiedlichen Transportgeschwindigkeit weitergeleitet wird. Zur Erleichterung der Überführung der Grundträger von einem auf ein anderes Transportelement können ein oder mehrere Stopper eingesetzt werden.

Es ist aber auch möglich, nahe dem Transportelement 9 eine Schneckeneinrichtung anzuordnen, die einen sich drehenden Zylinder aufweist, auf dessen Außenfläche eine schraubenlinienförmige Nut vorgesehen ist. Die Mittelachse des Zylinders ist im Wesentlichen parallel zum Verlauf des Transportelements 9 angeordnet. Auf dem Transportelement 9 angelieferte Grundträger 11 oder Objektträger 13 können mit einer geeigneten Nase in die schraubenlinienförmige Nut eingreifen und werden nun mit der von dem Schneckenförderer vorgegebenen Geschwindigkeit in Förderrichtung weiterbewegt. Dabei ist es möglich, eine höhere Fördergeschwindigkeit aufzugeben oder aber eine geringere, wobei nachfolgende Grundträger 11 aufgestaut werden. Eine derartige Schneckeneinrichtung kann bei Bedarf auch mit einem oder mehreren Stoppern kombiniert werden. Die Schneckeneinrichtung kann auch auf einer gedachten Schraubenlinie angeordnete Vorsprünge aufweisen, die in dem Transportweg der Grundträger ragen und diese erfassen. Damit können die Grundkörper mit einer Geschwindigkeit befördert werden, die von der des Transportelements 9 abweicht.

Im Bereich einer Bearbeitungsstation können auch Objektträger 13 vom Grundträger 11 getrennt und ausgetauscht werden, insbesondere dann, wenn im Bereich einer derartigen als Wechselstation zu bezeichnenden Bearbeitungsstation eine auf einen Wechsel angepasste Transportgeschwindigkeit vorgegeben wird und/oder Stopper vorgesehen sind, die den Wechsel der Objektträger 13 erleichtern können.

Besonders vorteilhaft ist es, dass bei der hier beschriebenen Transporteinrichtung 1 das Transportelement 9 angetrieben und vorzugsweise als Riemen ausgebildet ist. Dadurch lassen sich die Transportwege in einem sehr weiten Rahmen frei wählen. Es sind auch enge Kurven realisierbar. Außerdem können auch Höhenunterschiede überbrückt werden aufgrund der oben beschriebenen Maßnahmen, mit deren Hilfe vom Transportelement 9 mitgeführte Grundträger 11 mit dem Transportelement gekoppelt werden können, so dass sie bei einem Anstieg nicht zurückrollen beziehungsweise bei einem Abfall nicht beschleunigen und möglicherweise Schaden nehmen.

Da im gesamten Verlauf des Transportelements und der mitgeführten Grundträger 11 keine störenden Antriebseinrichtungen vorhanden sind, kann die Transporteinrichtung 1 sehr kompakt aufgebaut werden. Überdies ist es möglich, Puffer und Bearbeitungsstationen in einem weiten Rahmen frei anzuordnen, eben ohne Rücksicht auf irgendwelche Antriebseinrichtungen nehmen zu müssen. Antriebskräfte können praktisch an jeder Umlenkung des Transportelements 9 mittels einer Rolle eingespeist werden.

Schließlich können geschlossene Transportwege auch mit unterschiedlichen Umlenkrichtungen realisiert werden, nämlich dann, wenn das Transportelement 9 verschränkt und damit um 180° gedreht wird. Die Verschränkung des Transportelements 9 kann dadurch realisiert werden, dass Umlenkrollen verwendet werden über die das Transportelement 9 geführt wird. Die Drehachse mehrerer aufeinander folgender Umlenkrollen ist mehr und mehr geneigt, bis eine 180°-Verschränkung des Transportelements 9 erreicht ist. Natürlich können hier einige oder auch alle Umlenkrollen angetrieben werden.

Insgesamt wird deutlich, dass mittels der hier beschriebenen Transporteinrichtung 1 ein universelles Transportsystem realisierbar ist.

## Patentansprüche

1. Transporteinrichtung (1) mit einem flachen, angetriebenen Transportelement (9) und mindestens einem auf diesem mittels Rollen (31,33) gelagerten Grundträger (11), an den wenigstens ein Objektträger (13) angebracht ist, **dadurch gekennzeichnet, dass** das Transportelement (9) als ein einziger, flexibler Riemen mit Längskanten (27,29) ausgebildet ist, und dass zwischen den Längskanten (27,29) des Transportelements (9) und den Rollen (31,33) des Grundträgers (11) eine Kopplung durch Formschluss entsteht.

2. Transporteinrichtung (1) nach Anspruch 1, **dadurch gekennzeichnet, dass** das Transportelement (9) kontinuierlich angetrieben ist.

3. Transporteinrichtung (1) nach einem der vorhergehenden Ansprüche, **dadurch gekennzeichnet, dass** mindestens ein Objektträger (13) als Clip ausgebildet ist und mindestens einen Haltearm (45 und/oder 47) umfasst, der einen Gegenstand (15) umgreift und sicher hält.

4. Transporteinrichtung nach Anspruch 3, **dadurch gekennzeichnet, dass** der mindestens eine Haltearm (45,47) elastisch federnd ausgebildet ist.

5. Transporteinrichtung (1) nach einem der vorhergehenden Ansprüche, **dadurch gekennzeichnet, dass** der Objektträger (13) gegenüber dem Grundträger (11) verlagerbar ist.

6. Transporteinrichtung (1) nach einem der vorhergehenden Ansprüche, **gekennzeichnet durch** eine als Schwalbenschwanzverbindung (43) realisierbare Befestigung zwischen Grundträger (11) und Objektträger (13).

7. Transporteinrichtung (1) nach einem der vorhergehenden Ansprüche, **gekennzeichnet durch** ein eine Anzahl von Objektträgern (13) aufnehmendes Magazin (49).

8. Transporteinrichtung (1) nach Anspruch 7, **dadurch gekennzeichnet, dass** das Magazin (49) Befestigungselemente (57,57') für Objektträger (13) aufweist.

9. Transporteinrichtung (1) nach einem der Ansprüche 7 oder 8, **dadurch gekennzeichnet, dass** das Magazin (49) einen im Wesentlichen zylindrisch aufgebauten Grundkörper (51) aufweist.

10. Transporteinrichtung (1) nach einem der vorhergehenden Ansprüche, **dadurch gekennzeichnet, dass** der Grundträger (11) einen mit mindestens zwei, vorzugsweise drei Rollen (31;31a,31b;33) versehenen Grundkörper (61) aufweist.

11. Transporteinrichtung (1) nach Anspruch 10, **dadurch gekennzeichnet, dass** der Grundträger (11) Biegezonen (63a,63b) für die Rollen (31 a,31 b) aufweist, sodass die Rollen (31 a,31 b) elastisch schwenkbar gegenüber dem Grundkörper (61) des Grundträgers (11) gelagert sind.

12. Transporteinrichtung (1) nach einem der vorhergehenden Ansprüche, **dadurch gekennzeichnet, dass** das Transportelement (9) verschränkbar ist.

13. Transporteinrichtung (1) nach einem der vorhergehenden Ansprüche, **gekennzeichnet durch** eine Klemmvorrichtung zur Kopplung des Grundträgers (11) mit dem Transportelement (9).

14. Transporteinrichtung (1) nach einem der vorhergehenden Ansprüche, **gekennzeichnet durch** eine Anpressvorrichtung, mittels derer der Grundträger (11) gegen das Transportelement (9) andrückbar ist.

## Claims

1. A transport device (1), with a flat transport element (9), which is driven, and with at least one basic carrier (11), which is mounted on the latter by means of rollers (31,33) and onto which at least one article carrier (13) is mounted, **characterized in that** the transport element (9) is configured as a single flexible belt having longitudinal edges (27,29), and that a coupling by positive locking occurs between the longitudinal edges (27,29) of the transport element (9) and the rollers (31,33) of the basic carrier (11).

2. The transport device (1) according to claim 1, **characterized in that** the transport element (9) is driven continuously.

3. The transport device (1) according to any one of the preceding claims, **characterized in that** at least one article carrier (13) is configured as a clip and comprises at least one holding arm (45 and/or 47) engaging around and securely holding an article (15).

4. The transport device according to claim 3, **characterized in that** the at least one holding arm (45,47) is configured in a flexible resilient manner.

5. The transport device (1) according to any one of the preceding claims, **characterized in that** the article carrier (13) is displaceable with respect to the basic carrier (11).

6. The transport device (1) according to any one of the preceding claims, **characterized by** a fastening between the basic carrier (11) and article carrier (13), said fastening being capable of being implemented as a dovetail connection (43).

7. The transport device (1) according to any one of the preceding claims, **characterized by** a magazine (49) receiving a number of article carriers (13).

8. The transport device (1) according to claim 7, **characterized in that** the magazine (49) includes fastening elements (57,57') for article carriers (13).

9. The transport device (1) according to any one of the preceding claims 7 or 8, **characterized in that** the magazine (49) has a basic body (51) of essentially cylindrical construction.

10. The transport device (1) according to any one of the preceding claims, **characterized in that** the basic carrier (11) includes a basic body (61) provided with at least two, preferably three rollers (31;31a,31b;33).

11. The transport device (1) according to claim 10, **characterized in that** the basic carrier (11) includes bending zones (63a,63b) for the rollers (31a,31b), so that the rollers (31a,31b) are mounted elastically pivotably with respect to the basic body (61) of the basic carrier (11).

12. The transport device (1) according to any one of the preceding claims, **characterized in that** the transport element (9) is capable of being crossed.

13. The transport device (1) according to any one of the preceding claims, **characterized by** a clamping device for coupling the basic carrier (11) with the transport element (9).

14. The transport device (1) according to any one of the preceding claims, **characterized by** a pressing device, by means of which the basic carrier (11) can be pressed against the transport element (9).

## Revendications

1. Dispositif de transport (1) comprenant un élément de transport (9) plat entraîné et au moins un support de base (11) monté sur celui-ci au moyen de galets (31, 33), sur lequel au moins un porte-objet (13) est installé, **caractérisé en ce que** l'élément de transport (9) est réalisé sous la forme d'une unique courroie flexible dotée d'arêtes longitudinales (27, 29), et **en ce qu'**un couplage est obtenu par complémentarité de formes entre les arêtes longitudinales (27, 29) de l'élément de transport (9) et les galets (31, 33) du support de base (11).

2. Dispositif de transport (1) selon la revendication 1, **caractérisée en ce que** l'élément de transport (9) est entraîné en continu.

3. Dispositif de transport (1) selon l'une des revendications précédentes, **caractérisé en ce qu'**au moins un porte-objet (13) est réalisé sous la forme d'une pince et comprend au moins un bras de retenue (45 et/ou 47) qui entoure et maintient solidement un objet (15).

4. Dispositif de transport selon la revendication 3, **caractérisé en ce que** l'au moins un bras de retenue (45, 47) est réalisé de manière élastique.

5. Dispositif de transport (1) selon l'une des revendications précédentes, **caractérisé en ce que** le porte-objet (13) peut être déplacé par rapport au support de base (11).

6. Dispositif de transport (1) selon l'une des revendications précédentes, **caractérisé par** une fixation pouvant être réalisée sous la forme d'un assemblage en queue d'aronde (43) entre le support de base (11) et le porte-objet (13).

7. Dispositif de transport (1) selon l'une des revendications précédentes, **caractérisé par** un magasin (49) recevant un certain nombre de porte-objets (13).

8. Dispositif de transport (1) selon la revendication 7, **caractérisé en ce que** le magasin (49) comporte des éléments de fixation (57, 57') pour porte-objets (13).

9. Dispositif de transport (1) selon l'une des revendications 7 ou 8, **caractérisé en ce que** le magasin (49) comporte un corps de base (51) constitué de manière sensiblement cylindrique.

10. Dispositif de transport (1) selon l'une des revendications précédentes, **caractérisé en ce que** le support de base (11) comporte un corps de base (61) pourvu d'au moins deux, de préférence trois, galets (31 ; 31a, 31b ; 33).

11. Dispositif de transport (1) selon la revendication 10, **caractérisé en ce que** le support de base (11) comporte des zones de flexion (63 a, 63b) pour les galets (31a, 31b), de telle manière que les galets (31a, 31b) sont montés pivotants de manière élastique par rapport au corps de base (61) du support de base (11).

12. Dispositif de transport (1) selon l'une des revendications précédentes, **caractérisé en ce que** l'élément de transport (9) peut être tourné.

13. Dispositif de transport (1) selon l'une des revendications précédentes, **caractérisé par** un dispositif de serrage destiné au couplage du support de base (11) avec l'élément de transport (9).

14. Dispositif de transport (1) selon l'une des revendications précédentes, **caractérisé par** un dispositif de pression au moyen duquel le support de base (11) peut être pressé contre l'élément de transport (9).
